(19) Europäisches Patentamt
European Patent Office
Office européen des brevets

(11) Publication number: 0 415 678 A2

# (12) EUROPEAN PATENT APPLICATION

(21) Application number: **90309343.3**

(51) Int. Cl.[5]: **C08G 75/02**, H01F 1/00

(22) Date of filing: **24.08.90**

(30) Priority: **28.08.89 JP 218538/89**

(43) Date of publication of application:
**06.03.91 Bulletin 91/10**

(84) Designated Contracting States:
**BE CH DE FR GB IT LI NL**

(71) Applicant: **Tosoh Corporation**
**4560, Oaza Tonda**
**Shinnanyo-shi Yamaguchi-ken(JP)**

(72) Inventor: **Otsu, Takayuki**
**1-3441-3, Gakuenmidorigaoka**
**Nara-shi, Nara-ken(JP)**
Inventor: **Yamada, Bunichiro**
**6-11-10-308, Nishiokamoto, Higashinada-ku**
**Kobe-shi, Hyogo-ken(JP)**

(74) Representative: **Kearney, Kevin David Nicholas et al**
**KILBURN & STRODE 30 John Street**
**London, WC1N 2DD(GB)**

## (54) Poly(phenylene sulfide ketone) ferromagnetic substance.

(57) A class of organic polymers exhibiting enhanced ferromagnetic properties are provided. The ferromagnetic polymeric substances comprise a major structural unit

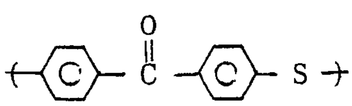

and have a degree of polymerization of at least 10 and a spin concentration of at least about 1 × $10^{17}$/g. The substances are melt-formable into various articles.

EP 0 415 678 A2

## POLY(PHENYLENE SULFIDE KETONE) FERROMAGNETIC SUBSTANCE

This invention relates to an organic ferromagnetic substance, in particular a poly(phenylene sulfide ketone) ferromagnetic substance comprising a major structural unit represented by

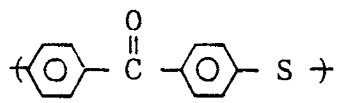

and which has a degree of polymerization of not less than 10 and a spin concentration of at least about $1 \times 10^{17}$/g.

Ferromagnetic substances have been widely used primarily as magnetic recording materials wherein their magnetic characteristics are exploited.

Conventional ferromagnetic substances have typically been those comprising transition metals of the 4th period, such as iron, cobalt and nickel, or alloys or oxides thereof.

On the other hand, regarding organic materials, McConnell proposed a notion of the development of "organic-magnetic property" [see J. Chem. Phys., 39 , 1910 (1963)]. The first notion of "organic-ferromagnetism" and "organic polymers exhibiting the organic-ferromagnetism" was proposed by Ito and Mataga [see Chemical Physics Letters, 1 , 235 (1967)].

Recently, certain compounds which are ferromagnetic substances nevertheless organic in nature have been reported; for example, Ovchinnikov et al. have reported the fact that poly[1,4-bis(2,2,6,6-tetramethyl-4-oxy-4-piperidyl-1-oxyl)butadiine] is a ferromagnetic substance [see Nature, 326 , 370 (1987)]. However, there are problems with this polymer such that it exhibits very weak magnetic properties and reproducibility of its performance has never been confirmed in tracing experiments.

In the 57th Autumn Annual Meeting of the Japan Chemical Society, 3D411 (1988), Otani et al. reported the fact that COPNA (condensed polynuclear aromatic) resins prepared by reacting pyrene with aromatic aldehydes in the presence of acid catalyst exhibit ferromagnetic properties. However, the COPNA resins also exhibit weak saturation magnetization and coercive force properties that prevent practical applications thereof.

We have discovered that a poly(phenylene sulfide ketone) material (hereinafter referred to as PPSK) is acceptable as a ferromagnetic substance, where it has a spin concentration of at least about $1 \times 10^{17}$/g. The present invention has been accomplished on the basis of this finding.

Accordingly, the present invention provides a PPSK ferromagnetic substance comprising a major structural unit represented by

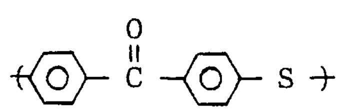

and which has a degree of polymerization of not less than 10 and a spin concentration of at least about $1 \times 10^{17}$/g.

The invention will be described hereinafter in more detail.

The PPSK ferromagnetic substance according to the invention comprises

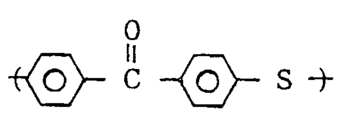

as a major structural unit. The words "main structural unit" used herein mean that the ferromagnetic substance comprises

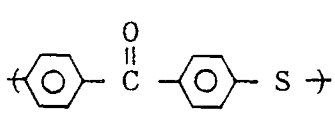

structural units in a proportion of at least 70 mole % preferably of at least 90 mole %. The remainder of structural units, if present, may comprise one or more copolymerizable units. Examples of the copolymerizable units which may be mentioned include:

p-phenylene sulfide unit

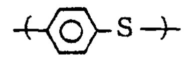,

m-phenylene sulfide unit

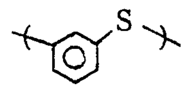,

o-phenylene sulfide unit

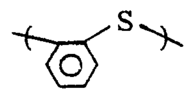,

phenylene sulfide sulfone unit

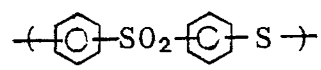,

phenylene sulfide ketone unit

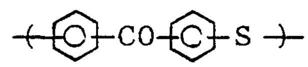,

(o- or m-positions)

phenylene sulfide ether unit

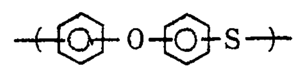,

diphenylene sulfide unit

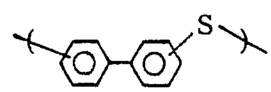,

trivalent or tetravalent phenylene sulfide unit and a mixture thereof. Furthermore, the organic PPSK ferromagnetic substance may have been oxidatively crosslinked by subjecting it to heat treatment in the presence of oxygen.

Preferably, the PPSK ferromagnetic substance has a degree of polymerization of not less than 10, and more preferably not less than about 20, but not greater than about 1000. Preferably, the PPSK ferromagnetic substance exhibits a melt viscosity in the range of about 10 - 50,000 poises as measured in a KOHKA-type flow tester with a die of 0.5 mm capillary diameter and 2.0 mm capillary length at a temperature of 365 ° C and a load of 10 kg. In order to obtain the PPSK ferromagnetic substances of the present invention, the spin concentration attained in the PPSK is essential. With a spin concentration at a level of at least about $1 \times 10^{17}$/g, preferably at least about $1 \times 10^{18}$/g, the PPSK may exhibit a satisfactory magnitude of ferromagnetism. The term "spin concentration" used herein is intended to refer to the number of radicals per gram of PPSK. The quantity of radicals may be determined by the ESR (electron spin resonance) method. Although the precise mechanism by which the ferromagnetism is developed in the PPSK has not yet been fully clarified, a tendency has been observed that the level of magnetism is enhanced as the quantity of radicals increases.

Preparation of the PPSK ferromagnetic substance of the invention will be described.

The PPSK ferromagnetic substances according to the present invention may be obtained by the conventional polymerization processes. In particular, there may be mentioned the processes that are described, for example, in the Indian Journal of Chemistry, 21A, 501 (1982) and Japanese Patent Public Disclosure (KOKAI) 60-58435. The disclosures of these articles are incorporated by reference herein. Typically, an alkali metal sulfide and a dihalobenzophenone may be heated and reacted in an aprotic polar solvent.

Examples of the dihalobenzophenones which may be used in the invention include 4,4′-difluorobenzophenone, 4,4′-dichlorobenzophenone, 4,4′-dibromobenzophenone, 4,4′-di-iodobenzophenone and the like. Such a compound as 2,4′-difluorobenzophenone, 3,3′-difluorobenzophenone, 3,4′-difluorobenzophenone, 2,4′-dichlorobenzophenone, 3,3′-dichlorobenzophenone, 3,4′-dichlorobenzophenone, 2,4′-dibromobenzophenone, 3,3′-dibromobenzophenone, 3,4′-dibromobenzophenone and the like may be copolymerized in a proportion of less than 30 mole %, preferably less than 10 mole %. A polyhalide aromatic compound other than the dihalobenzophenones may also be copolymerized in a proportion of less than 30 mole %,

preferably less than 10 mole %; for example, p-, m- and o-dihalobenzenes, 4,4′-dihalodiphenyl ethers, 4,4′-dihalodiphenyl sulfones, 4,4′-dihalobiphenyls, substituted dihalobenzenes of the general formula

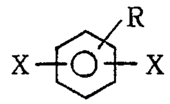

(where X each represents a halogen and R represents an alkyl, nitro, phenyl, alkoxy, amino or carboxylic group or a metal salt of carboxylate), trihalobenzenes, tetrahalobenzenes and the like may be copolymerized.

The solvent used in the invention is preferably an aprotic polar solvent and such a solvent that is stable to alkalis at elevated temperatures is particularly preferred. Examples of the solvents include N,N-dimethylacetamide (DMA), N-ethyl-2-pyrrolidone, hexamethyl phosphoric triamide (HMPA), dimethyl sulfoxide (DMSO), N-methyl-2-pyrrolidone (NMP), 1,3-dimethyl imidazolidinone and the like and mixtures thereof.

The amount of solvent used in the synthesis is such that the resulting PPSK is present in a concentration of about 3 - 60%, preferably 7 - 40%, by weight in the reaction mixture.

Examples of the alkali metal sulfides which may be used in the invention include lithium, sodium, potassium and cesium sulfides and mixtures thereof. The alkali metal sulfides may be used either in the form of dehydrate or hydrate (0.5 - 10 molar equivalent hydration). Of these alkali metal sulfides, sodium sulfide is the cheapest and preferred for use in industrial practice. The alkali metal sulfides may be formed in the polymerization system prior to introduction of the dihalobenzophenone into the system, or may be prepared outside the reaction system before it is added to the system.

In the polymerization process, use of a crown ether, phosphor salt or ammonium chloride known as a phase-transfer catalyst, or use of an auxiliary such as an alkali metal carboxylate may be effective in increasing the molecular weight of the resulting polymer product.

As examples of the alkali metal hydroxides which may be optionally used in the present invention, lithium, sodium and potassium hydroxides and mixtures thereof may be mentioned. The alkali metal hydroxides may be used either as a solid or as an aqueous solution.

The reaction for producing the present ferromagnetic polymers is usually effected at about 80 -345° C, preferably 100 - 280° C, for 0.5 - 24 hours with stirring. Where the reaction temperature is lower than about 80° C, the reaction rate will become unacceptably lowered. The reaction at temperatures above 345° C will undesirably lead to decomposition of the polymer.

The resulting polymer may be conventionally recovered; for example, it may be isolated by vacuum distillation, by flash distillation or by reprecipitation using water or an organic solvent, washed with water or an organic solvent and then dried.

The present PPSK material may be heated either in an oxygen-containing atmosphere or an oxygen-free atmosphere so as to cause chain-extension and/or cross-linking and/or branching of the polymeric molecules. The particular conditions for effecting this heat treatment include a temperature in the range of about 20 - 80° C lower than the melting point of the material to be treated and a period of from about 1 to about 24 hours, preferably from 1 to 12 hours. As examples of the oxygen-containing atmosphere, pure oxygen, oxygen-containing gases, air and the like may be mentioned. As examples of the oxygen-free atmosphere, nonoxiding inert gases, such as helium, argon, nitrogen, carbon dioxide, steam etc., may be mentioned.

The thus obtained ferromagnetic PPSK materials may be treated, if desired, with reinforcing fillers, for example glass fibers, carbon fibers or ceramic fibers such as alumina fibers, aramide fibers, wholly aromatic polyester fibers, metallic fibers and potassium titanate fibers; with inorganic fillers, for example calcium carbonate, mica, talc, silica, barium sulfate, calcium sulfate, kaolin, clay, pyroferrite, bentonite, sericite, zeolites, nephelinesyenite, attapulgite, wollastonite, ferrites, calcium silicate, magnesium carbonate, dolomite, antimony trioxide, zinc oxide, titanium oxide, magnesium oxide, iron oxides, molybdenum disulfide, graphite, gypsum, glass beads, powdered glass, glass balloons, quartz glass; or with organic or inorganic pigments.

If desired, mold release agents, e.g. aromatic hydroxy derivatives; silane or titanate coupling agents; lubricants; heat stabilizers; weathering agents; nucleating agents; blowing agents; rust-proofing agents; ion-trapping agents; flame-retardants; flame-proofing aids and the like may be incorporated.

Furthermore, if desired, the ferromagnetic PPSK materials may be used as a blend with, for example, blended in the composition include homopolymers such as polyethylene, polybutadiene, polyisoprene, polychloroprene, polystyrene, polybutene, poly α-methylstyrene, polyvinyl acetate, polyvinyl chloride,

polyacrylates, polymethacrylates, polyacrylonitrile, polyamides (e.g. nylon 6; nylon 6,6; nylon 6,10; nylon 12; nylon 11; nylon 4,6 etc.), polyesters (e.g. polyethylene terephthalate, polybutylene terephthalate, polyarylates, etc.), polyurethanes, polyacetals, polycarbonates, polyphenylene oxide, polyphenylene sulfide, polyphenylene sulfide sulfones, polysulfones, polyether sulfones, polyaryl sulfones, polyether ketones, polyether ether ketones, polyimides, polyamide imides, silicone resins, phenoxy resins, fluorine resins and the like; random or block graft-copolymers; and mixtures thereof.

## Examples

The present invention will be illustrated in more detail with reference to the following Examples to which, however, the present invention is not restricted.

In the following Examples, the melt viscosities of the products were determined in a KOHKA-type flow tester provided with a die orifice 0.5 mm in diameter and 2 mm in length using a temperature of 365 °C and a weight of 10 kg.

The spin concentrations were determined by the ESR method using a commercially available- ESR apparatus, model JES-PE2X manufactured by Japan Electric Optical Laboratory
under the following conditions:
frequency of microwave: ca. 9.38 GHz (X-band)
output of microwave: 20 mW
sweep time: 4 minutes
measuring temperature: room temperature
modulation: 100 KHz, 0.4 mT
sweep magnetic field: 338 ± 10 mT
response time: 0.3 seconds

Determination of the ferromagnetic properties of the products was effected by the following test method.

A polymer powder was placed on the surface of water contained in a petri dish so as to allow the powder to float on the surface. Then, a permanent magnet was placed underneath the petri dish and it was observed whether or not the floating powder moved in response to the applied magnetic field. Where the powder moves it is judged that the powder is ferromagnetic. (This test method will be referred to as "floccing" method.)

## Example 1

An autoclave having a capacity of 2 ℓ and provided with a stirrer was charged with 1000 mℓ of N-methyl-2-pyrrolidone and 96.9 g (0.75 moles) of sodium sulfide ($Na_2S$; 60.4 wt% purity). The contents were heated up to 200 °C with stirring. During this heating-up period, 22.2 g of water and 0.0225 moles of hydrogen sulfide resulting from decomposition of $Na_2S$ were distilled off from the autoclave. The reaction system was cooled down to 80 °C. Thereafter, 173.9 g (0.693 moles) of 4,4′-dichlorobenzophenone was added to the system. The mixture was allowed to polymerize at 250 °C for 3 hours. After this reaction period, the mixture was cooled to room temperature. The resulting slurry was filtered and washed with water to isolate the polymer, which was dried overnight at 100 °C. The yield of the resultant polymer was 139.6 g (95%). The polymer showed a melt viscosity of 200 poises and a spin concentration of $1.7 \times 10^{18}$/g as determined by the ESR method.

It was found by the above-defined "floccing" method that the product polymer responded to the action of the magnet and moved towards the area of higher magnetic flux density.

## Example 2

The general procedure as described in Example 1 was repeated except that the $Na_2S$ dehydration stage was omitted, 1.5 g (0.0375 moles) of sodium hydroxide was added to the reaction mixture, 4,4′-dichlorobenzophenone was employed in a quantity of 179.3 g (0.714 moles) and the polymerization was effected at 150 °C for 3 hours and at 260 °C for a further hour. The polymer was obtained in a yield of 145.3 g (96%) and showed a melt viscosity of 260 poises and a spin concentration of $1.5 \times 10^{18}$/g. By the "floccing" method, it was found that the polymer was responsive to the magnetic field.

As can be seen from the above description of the invention, PPSK-based ferromagnetic materials are conveniently provided in accordance with the present invention. Furthermore, since the ferromagnetic polymers can be easily molded or otherwise shaped by the conventional melt processing techniques, for example, injection molding and extrusion, the polymers are expected to have a wide variety of applications.

## Claims

1. A poly(phenylene sulfide ketone) ferromagnetic substance comprising a major structural unit represented by

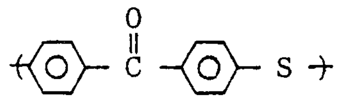

and which has a degree of polymerization of not less than 10 and a spin concentration of at least about 1 x $10^{17}$/g.

2. A ferromagnetic substance as claimed in Claim 1 wherein the major structural unit is present in a proportion of at least 70 mole %.

3. A ferromagnetic substance as claimed in claim 1 or 2 wherein the substance comprises in addition to the major structural unit, at least one structural unit selected from the group consisting of p-phenylene sulfide unit, m-phenylene sulfide unit, o-phenylene sulfide unit, phenylene sulfide sulfone unit, o-phenylene sulfide ketone unit, m-phenylene sulfide ketone unit, phenylene sulfide ether unit, diphenylene sulfide unit, trivalent and tetravalent phenylene sulfide units and mixtures thereof.

4. A ferromagnetic substance as claimed in Claim 1, 2 or 3 wherein the degree of polymerization is in the range of from 20 to 1000.

5. A ferromagnetic substance as claimed in any one of Claims 1 to 4 wherein the ferromagnetic substance has a melt viscosity of from 10 to 50000 poises as measured by the method as defined in the specification.

6. a ferromagnetic substance as claimed in Claim 5 wherein the ferromagnetic substance has a spin concentration of not less than 1 x $10^{18}$/g.

7. A method for producing a polyphenylene sulfide ketone) ferromagnetic substance which comprises reacting a dihalobenzophenone with an alkali metal sulfide in an aprotic polar solvent, optionally in the presence of an alkali metal hydroxide, at an elevated temperature.

8. A method as claimed in Claim 7 wherein the dihalobenzophenone is selected from 4,4′-difluoro, -dichloro, -dibromo or -diiodo benzophenone.

9. A method as claimed in Claim 7 or 8 wherein one or more other comonomers are copolymerized with said dihalobenzophenone.

10. An article prepared from the ferromagnetic substance as claimed in any one of Claim 1 to 6 or the substance when made by a method as claimed in any one of Claims 7 to 9.